# EUROPÄISCHE PATENTSCHRIFT

(11) **EP 1 792 852 B1**
(45) Veröffentlichungstag und Bekanntmachung des Hinweises auf die Patenterteilung: **24.11.2010**
(21) Anmeldenummer: 05026166.8
(22) Anmeldetag: 01.12.2005
(51) Int. Cl.: B65G 1/06, B65G 1/08, B65G 47/88

(54) **Lagergasse für Stückgüter mit Entnahmevorrichtung**
Storage lane for articles with discharge device
Voie de stockage avec un dispositif de décharge pour articles

(43) Veröffentlichungstag der Anmeldung: 06.06.2007
(73) Patentinhaber: Dynamic Systems Engineering b.v., 7005 AG Doetinchem (NL)
(72) Erfinder: Berndsen, Roland, 6942 EX Didam (NL); Lieftink, William, 7091 XG Dinxperlo (NL)
(74) Vertreter: Christophersen, Ulrich Rudolf

(56) Entgegenhaltungen:
- WO-A-01/36302
- US-A- 1 632 204
- PATENT ABSTRACTS OF JAPAN Bd. 007, Nr. 041 (M-194), 18. Februar 1983 (1983-02-18) & JP 57 189923 A (NISSAN JIDOSHA KK), 22. November 1982 (1982-11-22)

## Beschreibung

Die Erfindung betrifft ein Lager für Stückgüter mit den im Oberbegriff des Anspruchs 1 angegebenen Merkmalen. Ein solches Lager für Stückgüter ist aus der US-A-1,632,204 bekannt.

Aus der WO 01/36302 ist ein Lager für Stückgüter bekannt, welches aus einem gegenüber der Horizontalen abschüssig geneigten Lagerbereich, dessen Lagerebene von einer Vielzahl drehbarer Rollen gebildet wird. In der Lagerebene wird eine Reihe von Stückgütern bevorratet, von denen das vordere in einem Kommissionierbereich entnehmbar ist. Aufgrund der Neigung der Lagerebene rutschen die übrigen Stückgüter bei Entnahme des vorderen entlang eines gemeinsamen Transportweges sukzessive nach vorn in die Entnahmeposition. Das vordere Stückgut liegt bis zu seiner Entnahme jeweils an einem in den Transportweg bewegbaren und auf diese Weise die Bewegung der Stückgüter blockierenden Rückhalteelement an, wobei sich die übrigen Stückgüter jeweils an der Rückseite des vorhergehenden Stückgutes stauen. Je nach Art und vor allem Gewicht der bevorrateten Stückgüter entsteht auf diese Weise ein erheblicher Staudruck, der von dem Rückhalteelement aufgefangen wird.

Wird das Rückhalteelement aus dem Transportweg entfernt, so bewegen sich die bevorrateten Stückgüter entlang des Transportweges, wobei das vordere in den Kommissionierbereich gelangt und entnommen wird. Sobald das Stückgut das Rückhalteelement in Transportrichtung passiert hat, wird das Rückhalteelement erneut in den Transportweg bewegt und das ursprünglich an zweiter Stelle liegende Stückgut gelangt in Anlage mit dem Rückhalteelement.

Das bekannte Rückhalteelement wird von einem abgewinkelten Hebel gebildet, dessen Ende von unterhalb der Lagerebene entlang einer Kreisbahn in eine Position knapp oberhalb der Lagerebene verschwenkt werden kann, und auf diese Weise den Transportweg der sukzessive in Richtung auf die Entnahmeposition wandernden Stückgüter blockiert, wobei das vordere Stückgut in der Entnahmeposition mit seiner unteren Kante an dem Rückhalteelement anliegt. Derartige Rückhalteelemente haben sich für Stückgüter kubischer Gestalt, etwa Kartons, Getr-änkekisten usw., als gut geeignet erwiesen. Zugleich hat sich herausgestellt, dass das Rückhalteelement für einige andersfömige Stückgüter nicht gleichermaßen zuverlässig arbeitet. Werden z.B. Container bevorratet, die einen seitlich betrachtet trapezförmigen Querschnitt aufweisen, kann es zu Problemen bei der Entnahme kommen. Denn solche Container liegen nur im Bereich ihrer oberen Enden aneinander, in welchem Bereich sich der Staudruck bildet. Wird dieser Staudruck von dem Rückhalteelement dann ausschließlich an der unteren, vorderen Kante des ersten Containers aufgefangen, kann dieser um seine Anlagestelle an dem Rückhalteelement zu kippen beginnen, wodurch es zu Schrägstellungen und Verkantungen der bevorrateten Container kommen kann.

Auch andere bekannte Lösungen, bei denen eine Rückhalteplatte von unterhalb der Lagerebene in eine höher gelegene Position über der Lagerebene bewegbar ist, sind für derartige Container nicht geeignet, da es beim Zurückbewegen der Rückhalteplatte zwangsläufig zu der oben beschriebenen Situation kommt, in welcher der vordere Container an einer unteren Kante abgestützt ist, rückseitig aber mit einer höher gelegenen Staukraft beaufschlagt wird, so dass seine Lage instabil wird und er zu kippen beginnt.

**Aufgabe** der vorliegenden Erfindung ist es, ein Lager der eingangs genannten Art zu schaffen, das mit konstruktiv einfachen Mitteln auch für Stückgüter mit nicht kubischer Geometrie zuverlässig arbeitet.

Die Aufgabe wird mit dem Lager für Stückgüter gemäß Anspruch 1 gelöst.

Mit den erfindungsgemäßen Rückhaltemitteln wird eine Belastungssituation, in der auf das vordere Stückgut ein Kippmoment wirkt, vermieden. Es ist insbesondere nicht erforderlich, das Rückhalteelement durch vertikales Absenken aus dem Transportweg zu entfernen. Vielmehr werden die Rückhaltemittel von der Seite her aus dem Transportweg gedreht, so dass die Höhe des Abstützpunktes über der Lagerebene zwischen Rückhaltemittel und Stückgut gleich bleibt. Ein Verkippen von z.B. Containern mit trapezförmigem Querschnitt wird damit vermieden.

Die Ausgestaltung sieht vor, dass auf beiden Seiten des Lagers Rückhaltemittel angeordnet sind. die gegensinnig zueinander drehbar sind, um den an den Rückhaltemitteln anliegenden Staudruck symmetrisch auf beide Seiten des Lagers zu verteilen. Durch die gegensinnige und gegengleiche Drehung werden Schrägstellungen der Stückgüter gegenüber der Transportrichtung auch innerhalb der Lagerebene vermieden.

Erfindungsgemäß ist es , wenn die Rückhaltemittel frei drehbar sind und ihre Drehstellung über Stellelemente einstellbar ist. Über die Stellelemente können die Rückhaltemittel angesteuert bzw. betätigt werden. In diesem Zusammenhang hat es sich zur Vereinfachung des Lageraufbaus als besonders vorteilhaft erwiesen, wenn die Stellelemente mechanisch arbeitende Stellelemente sind.

Vorteilhaft sind die Stellelemente zwischen einer ersten Position oberhalb der Lagerebene und einer weiteren, tiefer gelegenen Position beweglich. Durch Absenken der Stellelemente wird eine Drehung der Rückhaltemittel möglich.

Bei der Erfindung weisen die Stellelemente eine Rolle auf, die sich an der Rückseite des Rückhalteelements abstützt, so dass die beim Bewegen der Stellelemente auftretenden Reibkräfte gegenüber dem Rückhafteelement minimiert werden.

Weiter wird vorgeschlagen, dass die Rolle entlang einer Kreisbahn beweglich ist, da sich eine kreisbahnförmige Bewegung in konstruktiv einfacher Weise von einer z.B. im Kommissionierbereich des Lagers befindlichen Antriebswelle eines Bandförderers, Horizontalförderers o.ä. abgreifen lässt, wodurch keine zusätzliche Energieversorgung der Stellelemente erforderlich ist.

In Bezug auf die Rückhalteelemente ist es von konstruktionstechnischem Vorteil, wenn diese von einer Platte gebildet werden, die sich in Ihrer Rückhaftestellung im wesentlichen quer zur Transportrichtung erstreckt und an Ihrer Vorderseite eine Anschlagfläche für das Stückgut bildet. Die Höhe der Platte kann entsprechend groß gewählt werden, so dass auch Stückgüter verschiedener Bauhöhen zuverlässig bevorratet werden können.

Mit einer weiteren vorteilhaften Ausgestaltung wird vorgeschlagen, dass die Platte an ihrer Rückseite eine Abrollfläche für die Rolle des Stellelementes aufweist, auf welcher die Rolle definiert abrollen kann.

Weiter wird vorgeschlagen, dass die Abrollfläche eine Abwinklung aufweist, die einen Winkel mit der Platte einschließt, der zwischen 0° und 90° liegt. Über eine solche Abwinklung lässt sich der Zusammenhang zwischen der Absenkung der Rolle und dem Drehwinkel des Rückhalteelements auf einfache Weise einstellen. Als besonders vorteilhaft haben sich Abwinklungen im Bereich zwischen 40° und 50° erwiesen. Bei einer stärkeren Abwinklung werden mit bereits geringen Absenkungen des Stellelements vergleichsweise große Winkeländerungen des Rückhalteelements erreicht.

Eine weitere vorteilhafte Ausgestaltung sieht vor, dass die Lagerebene bzw. der Transportweg von einer Rollenbahn mit mehreren angetriebenen Antriebsrollen gebildet wird.

In vorteilhafter Ausgestaltung weist der Kommissionierbereich einen Horizontalförderer mit einer gegenüber der Geschwindigkeit der sukzessive in die vordere Entnahmeposition wandernden Stückgüter erhöhter Fördergeschwindigkeit auf. Über den Horizontalförderer kann das vordere Stückgut vereinzelt werden. Das vordere Stückgut wird beschleunigt, so dass eine Lücke zum nächsten Stückgut entsteht.

Schließlich wird vorgeschlagen, dass der Horizontafförderer und das Stellelement über eine gemeinsame Antriebswelle angetrieben werden, wodurch sich ein im Aufbau einfaches, mit wenigen Teilen auskommendes Lager ergibt.

Weitere Einzelheiten und Vorteile eines erfindungsgemäßen Lagers für Stückgüter werden nachfolgend unter Zuhilfenahme der zugehörigen Zeichnungen erläutert, in denen
- Fig. 1: eine schematische Seitenansicht auf den Lagerendbereich sowie den Kommissionierbereich eines erfindungsgemäßen Lagers,
- Fign. 2a bis 2e: jeweils eine Draufsicht sowie eine entsprechende Seitenansicht eines erfindungsgemäßen Lagers zur Veranschaulichung der Vorgänge bei der Entnahme des vorderen Stückgutes zu verschiedenen Zeitpunkten des Entnahmevorgangs,
- Fig. 3: eine perspektivische Darstellung zweier Rückhalteelemente sowie eines Stellelements zur Veranschaulichung ihres Zusammenwirkens und
- Fign. 4a bis 4c: verschiedene Ansichten eines erfindungsgemäßen Rückhaltemittels
beispielhaft zeigen.

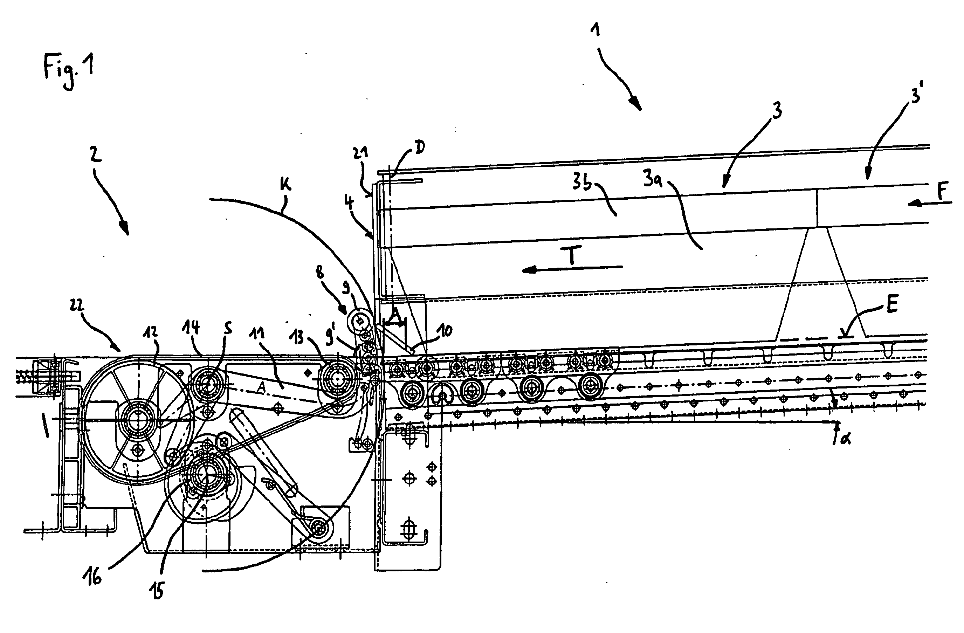

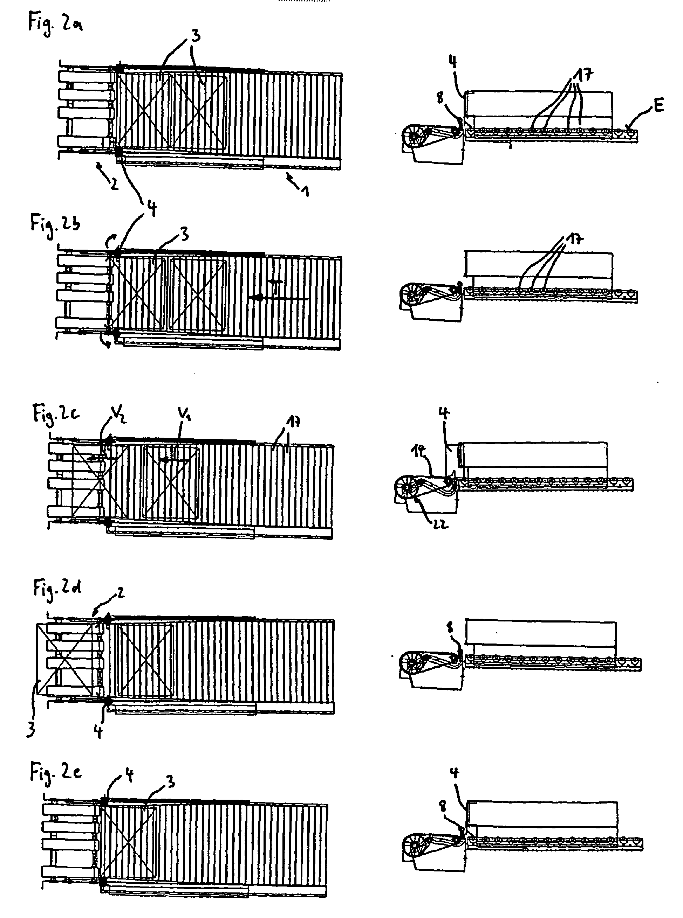

In Fig. 1 dargestellt ist ein erfindungsgemäßes Lager, das aus einem Lagerbereich 1, von dem nur das entnahmeseitige Ende dargestellt ist, und einem Kommissionierbereich 2 zusammengesetzt ist. Im Lagerbereich 1 wird eine Vielzahl von Stückgütern 3 bevorratet, die von der Seite her betrachtet nach Art von sich nach oben hin konisch oder trapezförmig erweiterten Containern gestaltet sind. Diese weisen unten einen konischen Abschnitt 3a und oben einen Rand 3b auf. Die Stückgüter 3 stehen mit dem schmalen Ende ihres konischen Abschnittes 3a auf der Lagerebene E des Lagerbereiches 1 auf und liegen mit ihren oberen Rändern 3b aneinander. Die Lagerebene E wird von einer Vielzahl drehbarer Antriebsrollen 17 gebildet (vgl. Fig. 2a) die in Fig. 1 der Übersicht halber nicht dargestellt sind.

Die im Lagerbereich 1 bevorrateten Stückgüter 3 liegen aneinander an und sind sukzessive beweglich, d.h. bei Entnahme des ersten Stückgutes 3 wandern sie selbsttätig entlang des Transportweges T um eine Position weiter in Richtung ihrer Entnahmeposition am vorderen Ende des Lagerbereiches 1. In Fig. 1 befindet sich das vordere Stückgut 3 in der Entnahmeposition, wohingegen das hintere Stückgut 3' noch nicht entnahmebereit ist. Das in der Entnahmeposition befindliche Stückgut 3 stützt sich mit seinem Rand 3b gegenüber dem Rückhaltemittel 4 ab, wohingegen sich das weitere Stückgut 3' an der Rückseite des vorderen Stückgutes 3 abstützt. Abhängig von der Anzahl der bevorrateten Stückgüter 3', die sich jeweils an der Rückseite des vorhergehenden Stückgutes 3 abstützen, ergibt sich ein erheblicher Staudruck bzw. eine Staukraft F, die auf das Rückhalteelement 4 wirkt.

Das Wandern bzw. Nachrutschen der Stückgüter 3 kann auf verschiedene Arten realisiert sein. Zum einen kann die Lagerebene E, wie auch in Fig. 1 dargestellt, um einen Neigungswinkel α gegenüber der Horizontalen abschüssig geneigt sein, so dass die Stückgüter 3 schon aufgrund der sogenannten Hangabtriebskraft in Richtung ihrer Entnahmeposition wandern. Alternativ oder auch zusätzlich hierzu können die Antriebsrollen 17 zur Vergleichmäßigung der Bewegung von schweren und leichten Stückgütern 3 auch aktiv angetrieben werden, wie dies in der DE 100 20 608 A1 beschrieben ist. Dies kann über einen gemeinsamen Antriebsriemen erfolgen.

Für die Erfindung wesentlich ist die Gestaltung des zwischen Lagerbereich 1 und Kommissionierbereich 2 eine Art Schleusentor für die bevorrateten Stückgüter 3 bildenden Rückhaltemittels 4. Das Rückhaltemittel 4 ist um eine zu der Lagerebene E senkrecht verlaufende Drehachse D drehbar und kann auf diese Weise von der Seite her wahlweise in den Transportweg T hinein oder aus diesem hinaus bewegt werden. Fig. 1 lässt den Vorteil des erfindungsgemäßen Rückhaltemittels 4 gegenüber den aus dem Stand der Technik bekannten Rückhaltemitteln erkennen. Denn während die Rückhaltemittel beim Stand der Technik durch die Lagerebene E hindurch nach unten abgesenkt werden, verlagert sich die Anlage zwischen dem Rückhaltemittel und den unter Druck anliegenden Stückgütern 3 kontinuierlich nach unten, wohingegen die Staukraft F im oberen Bereich der Stückgüter 3 anliegt. Hierdurch kann es zu einem Kippmoment kommen, durch welches das vordere oder gleich mehrere der vorderen Stückgüter 3 instabil werden, in Schieflage gelangen und nicht mehr zuverlässig kommissioniert werden können.

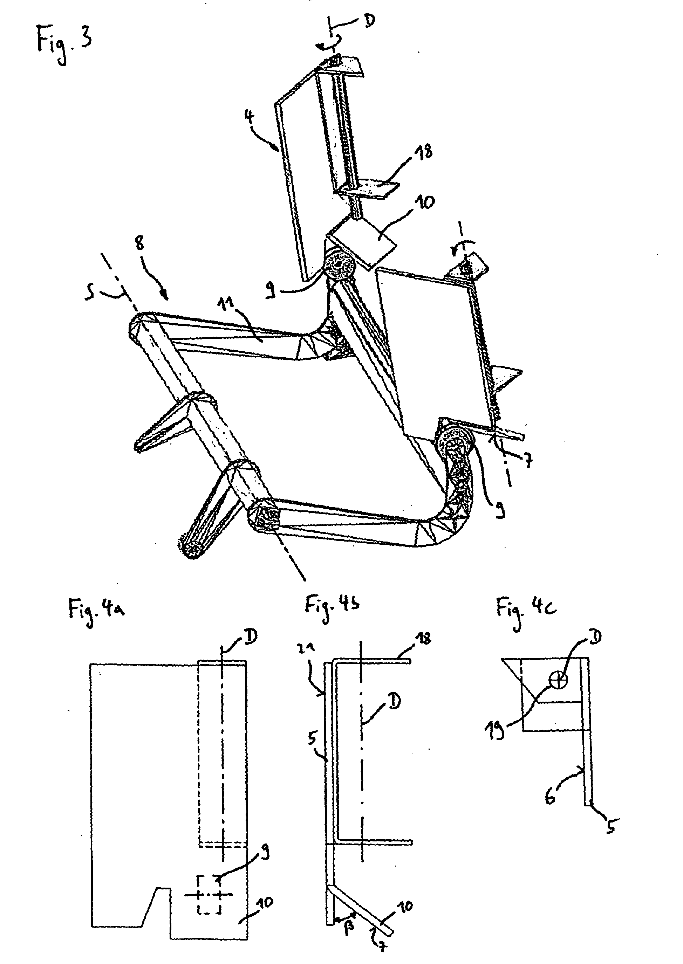

Die Funktionsweise des erfindungsgemäßen Rückhaltemittels 4 wird nachfolgend zunächst unter Zuhilfenahme der Fign. 1 und 3 erläutert. Wie sich Fig. 1 entnehmen lässt, ist das Rückhaltemittel 4 über eine Drehachse D frei drehbar gelagert, wobei an seiner Rückseite 21 ein Stellelement 8 anliegt. Wäre das frei drehbare Rückhaltemittel 4 rückseitig nicht über das Stellelement 8 abgestützt, so würde es sich bei Anliegen einer Staukraft F immer öffnen und sämtliche Stückgüter 3 passieren lassen. Um dies zu verhindern liegt das Stellelement 8 druckfest an der Rückseite 21 der Rückhaltemittel 4 an.

Das Stellelement 8 arbeitet rein mechanisch, weshalb z.B. das Anbringen zusätzlicher Versorgungsleitungen, wie pneumatische oder hydraulische Stellelemente diese benötigen, nicht erforderlich sind. Beim Ausführungsbeispiel ist das Stellelement 8 über eine Kupplung 16, beispielsweise eine Magnetkupplung, mit einer Antriebswelle 15 verbunden, die einen Horizontalförderer 22 antreibt. Bei Bedarf kann die Magnetkupplung 16 kuppeln und das Stellelement 8 bewegen, weshalb sich ein insgesamt einfacher Aufbau des Lagers ergibt.

Der Horizontalförderer 22 besteht aus zwei Riemenscheiben 12, 13 und einem über diese geführten Riemen 14, dessen Geschwindigkeit V₂ größer ist als die Geschwindigkeit V₁ der bevorrateten Stückgüter 3, vgl. Fig. 2c.

Das Stellelement 8 besteht im wesentlichen aus einer frei drehbar gelagerten Rolle 9, die am vorderen Ende eines Schwenkarms 11 montiert ist. Der Schwenkarm 11 ist im Bereich seines vorderen Endes um in etwa 90° abgewinkelt und rückseitig über eine Schwenkachse S schwenkbar gelagert. Beim Verschwenken des Schwenkarmes 11 um die Schwenkachse S bewegt sich die Rolle 9 entlang einer Kreisbahn deren Zentrum die Schwenkachse S bildet. In Fig. 1 eingezeichnet ist der Kreisbogen K, entlang dem sich der Anlagepunkt der Rolle 9 mit dem Rückhaltemittel 4 bewegt. Dargestellt ist die obere Endposition P₁, in welcher die Rolle 9 eine Position oberhalb der Lagerebene E einnimmt. Strichliniert angedeutet ist eine weitere Position der Rolle 9', in welcher diese schon deutlich gegenüber der oberen Endposition P₁ abgesenkt ist. Im Gegensatz zur oberen Endposition P₁, in welcher die Rolle 9 an der Rückseite 21 des Rückhalteelementes 4 anliegt, weist die strichliniert angedeutete Rolle 9' einen Abstand A gegenüber dessen Rückseite 21 auf. Hat die Rolle 9 daher die in Fig. 1 strichliniert dargestellte Position erreicht, so wird sich das Rückhaltemittel 4 aufgrund der anliegenden Staukraft F entsprechend dem Abstand A um die Drehachse D drehen, so dass die Rückseite 21 des Rückhaltemittels 4 stets in Kontakt mit der Rolle 9 bleibt. Beim Absenken des Sperrelementes 8 rollt die Rolle 9 auf der Oberfläche des Rückhalteelementes 4 ab. In der unteren Endstellung P₂ des Stellelements 8 befindet sich die Rolle 9 unterhalb der Lagerebene E und das Rückhaltemittel 4 hat in etwa eine 90° Drehung ausgeführt, so dass das vorderste Stückgut 3 aus dem Lagerbereich 1 austreten kann.

Der perspektivischen Darstellung in Fig. 3 lässt sich das Zusammenwirken des Stellelements 8 mit den Rückhattemitteln 4 besser entnehmen. Dargestellt ist ein Zwischenstadium, bei welchem die Rolle 9 bereits um einen gewissen Betrag abgesenkt ist, die zweite Position P₂ jedoch noch nicht erreicht hat. Die Rückhalteelemente 4 sind um einen Winkel von in etwa 45° aus ihrer Ausgangsstellung, in welcher sie noch quer zur Transportrichtung T ausgerichtet waren, verdreht. Zum Ausgleich des mit dem Absenken der Rolle 9 entstehenden Abstandes A beginnen die Rückhalteelemente 4 auf beiden Seiten des Lagers sich ähnlich einer zweiteiligen Tür zu öffnen, d.h. sich gegensinnig zu drehen, wodurch sie stets in Anlage mit der sich absenkenden Rolle 9 bleiben. Hierdurch entsteht eine mittige Durchtrittsöffnung für die Stückgüter 3, durch welche diese in Transportrichtung hindurchtreten und in den Kommissionierbereich gelangen können. Beim Drehen der RückhalteeJemente 4 um die Achse D rollen die Rollen 9 auf der Abrollfläche 7 der Rückhalteelemente 4 ab. Die Rollen 9 rollen mit ihrer inneren Kante entlang einer Bogenstrecke auf der sich über ihnen nach außen drehenden Abwinklung 10, bis die Rückhalteelemente 4 bei einem Drehwinkel von in etwa 90° ihre Öffnungsstellung erreicht haben und das vordere Stückgut 3 den Lagerbereich 1 verlässt.

Die einzelnen Verfahrensstadien bei der Entnahme eines Stückgutes 3 aus dem Lagerbereich 1 sind den Fign. 2a bis 2e zu entnehmen. Solange sich die Stellelemente 8 in ihrer oberen Position P₁ befinden, sind die Rückhaltemittel 4 in ihrer Rückhalteposition, vgl. Fig. 2a. Beim Absenken der Stellelemente 8 beginnen die Rückhaltemittel 4 sich um die Drehachse D zu drehen, so dass das vorderste Stückgut 3 den Lagerbereich 1 verlassen und in den sich in Transportrichtung T anschließenden Kommissionierbereich 2 gelangen kann, Fig. 2b.

In Fig. 2c ist das Stellelement 8 in seiner unteren Position P₁ dargestellt, d.h. die Öffnung zwischen den auf beiden Seiten des Lagerbereichs angeordneten rückhaltemitteln 4 ist maximal. Sobald das Stückgut 3 den Kommissionierbereich 2 erreicht hat, wird es über den angetriebenen Riemen 14 eines Horizontalförderers 22 auf eine Geschwindigkeit V₂ beschleunigt, die größer ist, als die Geschwindigkeit V₁ der entlang des Transportweges T wandernden Stückgüter 3, so dass zwischen dem zu entnehmenden Stückgut 3 und dem sich rückseitig anschließenden Stückgut 3 eine Lücke entsteht. Ist das zu entnehmende Stückgut 3 (vgl. Fig. 2d) in den Kommissionierbereich 2 gelangt, drehen sich die Rückhaltemittel 4 innerhalb der so erzeugten Lücke wieder zurück in ihre Rückhaltestellung, so dass dann das nächste Stückgut 3 anliegt. Beim Zurückdrehen der Rückhalteelemente 4 innerhalb der Lücke wirkt keine Staukraft F auf die Rückhalteelemente 4, so dass die Stellelemente 8 z.B. mittels einer Feder wieder in ihre obere Position P₁ zurückschwenken, wobei die Rollen 9 entlang des Kreisbogens K zurückschwenken und so auch die Rückhalteelemente 4 in ihre Rückhaltestellung zurückdrehen.

Einzelheiten des erfindungsgemäßen Rückhaltemittels 4 sind in den Fign. 4a bis 4c dargestellt. Das Rückhalteelement 4 besteht aus einer Platte 5 und einer Aufhängung 18, welche die Platte 5 um die Drehachse D drehbar lagert. Die Platte 5 weist an ihrem unteren Ende eine Abwinklung 10 auf, die einen Winkel β mit der übrigen Platte 5 von in etwa 45° einschließt. In diesem Bereich rollt die in Fig. 4a angedeutete Rolle 9 des Stellelements 8 ab, während sich die Platte 5 öffnet bzw. schließt. Oberhalb der Abwinklung 10 befindet sich die Aufhängung 18, die beim Ausführungsbeispiel nach Art einer U-förmig gebogenen Lasche gestaltet ist. Die beiden Schenkel des U sind mit einer Bohrung 19 versehen, in welcher die Drehachse D. beispielsweise ein Drehbolzen, aufgenommen werden kann.

### Bezugszeichen:

| | | | |
|---|---|---|---|
| 1 | Lagerbereich | D | Drehachse |
| 2 | Kommissionierbereich | S | Schwenkachse |
| 3 | Stückgut | T | Transportweg |
| 3a | konischer Abschnitt | K | Kreisbogen |
| 3b | Rand | F | Kraft, Staukraft |
| 4 | Rückhaltemittel | E | Lagerebene |
| 5 | Platte | P₁ | erste Position |
| 6 | Anschlagfläche | P₂ | zweite Position |
| 7 | Abrollfläche | V₁ | Geschwindigkeit |
| 8 | Stellelement | V₂ | Geschwindigkeit |
| 9 | Rolle | α | Neigungswinkel |
| 10 | Abwinklung | β | Winkel |
| 11 | Schwenkarm | | |
| 12 | Riemenscheibe | | |
| 13 | Riemenscheibe | | |
| 14 | Riemen, Antriebsriemen | | |
| 15 | Antriebswelle | | |
| 16 | Kupplung | | |
| 17 | Antriebsrollen | | |
| 18 | Aufhängung | | |
| 19 | Bohrung | | |
| 21 | Rückseite | | |
| 22 | Horizontalförderer | | |

## Patentansprüche

1. Lager für Stückgüter mit
a) einem Lagerbereich (1), in dem in einer Reihe angeordnete Stückgüter in einer gemeinsamen Lagerebene (E) bevorratet werden, In welcher sie entlang eines gemeinsamen Transportweges (T) sukzessive in eine vordere Entnahmeposition wandern, und
b) einem Kommissionierbereich (2) mit durch Drehung um eine im wesentlichen senkrecht zur Lagerebene (E) verlaufende Drehachse (D) in den Transportweg (T) bewegbaren Rückhaltemitteln (4), an denen das jeweils in der Entnahmeposition befindliche Stückgut (3) anliegt, wobei die Rückhaltemittel (4) auf beiden Seiten des Lagers angeordnet und gegensinnig zueinander drehbar sind,
**dadurch gekennzeichnet,**
**dass** die Rückhaltemittel (4) frei drehbar sind, dass ihre Drehstellung über Stellelemente (8) einstellbar ist, die eine Rolle (9) aufweisen, und dass sich die Rolle (9) an der Rückseite (21) des Rückhalteelements (4) abstützt.

2. Lager nach Anspruch 1, **dadurch gekennzeichnet, dass** die Stellelemente (8) mechanisch arbeitende Stellelemente sind.

3. Lager nach Anspruch 1 oder 2, **dadurch gekennzeichnet, dass** die Stellelemente (8) zwischen einer ersten Position (P₁) oberhalb der Lagerebene (E) und einer zweiten, tiefer gelegenen Position (P₂) beweglich sind.

4. Lager nach Anspruch 3, **dadurch gekennzeichnet, dass** sich die Stellelemente (8) in der tiefer gelegenen Position (P₂) unterhalb der Lagerebene (E) befinden.

5. Lager nach Anspruch 1, **dadurch gekennzeichnet, dass** die Rolle (9) entlang einer Kreisbahn (K) beweglich ist.

6. Lager nach einem der vorhergehenden Ansprüche, **gekennzeichnet durch** eine Platte (5) als Rückhalteelement (4), die sich in ihrer Rückhaltstellung im wesentlichen quer zur Transportrichtung (T) erstreckt und an ihrer Vorderseite eine Anschlagfläche (6) für das Stückgut bildet.

7. Lager nach Anspruch 6, **dadurch gekennzeichnet, dass** die Platte (5) an ihrer Rückseite (21) eine Abrollfläche (7) für die Rolle (9) des Stellelemente (8) aufweist.

8. Lager nach Anspruch 7, **dadurch gekennzeichnet, dass** die Abrollfläche (7) eine Abwinklung (10) aufweist, die einen Winkel (β) mit der Platte (5) einschließt, der zwischen 0 und 90° beträgt.

9. Lager nach einem der vorhergehenden Ansprüche, **dadurch gekennzeichnet, dass** die Lagerebene (E) von einer Rollenbahn mit mehreren angetriebenen Antriebsrollen (17) gebildet wird.

10. Lager nach einem der vorhergehenden Ansprüche, **dadurch gekennzeichnet, dass** der Kommisslonierbereich (2) einen Horizontalförderer (22) mit einer gegenüber der Geschwindigkeit (V₁) der sukzessive in die vordere Entnahmeposition wandernden Stückgüter erhöhter Fördergeschwindigkeit (V₂) aufweist.

11. Lager nach Anspruch 10, **dadurch gekennzeichnet, dass** der Horizontalförderer (22) und das Stellelement (8) über eine gemeinsame Antriebswelle (15) angetrieben werden.

## Claims

1. A store for piece goods with
a) a storage region (1) in which piece goods arranged in a row are stored in a common storage plane (E) in which they move along a common conveying path (T) in succession into a front removal position, and
b)a commissioning region (2) with retention means (4) which are movable in the conveying path (T) by rotation about an axis of rotation (D) extending substantially at a right angle to the storage plane (E), wherein the retention means (4) are arranged on both sides of the store and are rotatable in opposite directions with respect to each other,
**characterized in that**
the retention means (4) are freely rotatable, the rotational setting thereof is capable of being set by way of setting elements (8) which comprise a roller (9), and the roller (9) is supported on the rear side (21) of the retention element (4).

2. A store according to claim 1, **characterized in that** the setting elements (8) are setting elements operating mechanically.

3. A store according to claim 1 or 2, **characterized in that** the setting elements (8) are movable between a first position (P₁) above the storage plane (E) and a second position (P₂) situated at a lower level.

4. A store according to claim 3, **characterized in that** the setting elements (8) are situated in the position (P₂) situated at a lower level below the storage plane (E).

5. A store according to claim 1, **characterized in that** the roller (9) is movable along a circular path (K).

6. A store according to any one of the preceding claims, **characterized by** a plate (5) as a retention element (4) which in the retention setting thereof extends substantially transversely to the conveying direction (T) and which on the front side thereof forms a stop face (6) for the piece goods.

7. A store according to claim 6, **characterized in that** the plate (5) has on the rear side (21) thereof a rolling face (7) for the roller (9) of the setting element (8).

8. A store according to claim 7, **characterized in that** the rolling face (7) has an angling (10) which with the plate (5) forms an angle (β) which amounts to between 0 and 90°.

9. A store according to any one of the preceding claims, **characterized in that** the storage plane (E) is formed by a roller bed with a plurality of driven drive rollers (17).

10. A store according to any one of the preceding claims, **characterized in that** the commissioning region (2) has a horizontal conveyor (22) with a conveying speed (V₂) increased with respect to the speed (V₁) of the successive piece goods moving into the front removal position.

11. A store according to claim 10, **characterized in that** the horizontal conveyor (22) and the setting element (8) are driven by way of a common drive shaft (15).

## Revendications

1. Stock pour colis comprenant
a) une zone de stockage (1), dans laquelle des colis disposés dans une rangée sont stockés dans un plan de stockage (E) commun, dans lequel ils s'acheminent le long d'une course de transport (T) commune de façon successive dans une position de prélèvement avant, et
b) une zone de préparation de commandes (2) avec des moyens de retenue (4) pouvant être déplacés par rotation autour d'un axe de rotation (D), agencé sensiblement perpendiculairement au plan de stockage (E), dans la course de transport (T), moyens sur lesquels s'applique le colis (3) se trouvant respectivement dans la position de prélèvement, les moyens de retenue (4) étant disposés sur les deux côtés du stock et pouvant tourner dans le sens contraire les uns par rapport aux autres,
**caractérisé en ce que**
les moyens de retenue (4) peuvent tourner librement, **en ce que** leur position de rotation est réglable au moyen d'éléments de réglage (8), lesquels présentent un rouleau (9) et **en ce que** le rouleau (9) s'appuie sur l'arrière (21) de l'élément de retenue (4).

2. Stock selon la revendication 1, **caractérisé en ce que** les éléments de réglage (8) sont des éléments de réglage travaillant de façon mécanique.

3. Stockage selon la revendication 1 ou 2, **caractérisé en ce que** les éléments de réglage (8) peuvent se déplacer entre une première position (P₁) au-dessus du plan de stockage (E) et une seconde position (P₂) située plus bas.

4. Stock selon la revendication 3, **caractérisé en ce que** les éléments de réglage (8) se trouvent dans la position (P₂) située plus bas au-dessous du plan de stockage (E).

5. Stock selon la revendication 1, **caractérisé en ce que** le rouleau (9) est mobile le long d'une trajectoire circulaire (K).

6. Stock selon l'une quelconque des revendications précédentes, **caractérisé par** une plaque (5) comme élément de retenue (4), qui s'étend dans sa position de retenue principalement transversalement au sens de transport (T) et forme sur son côté avant une surface de butée (6) pour le colis.

7. Stock selon la revendication 6, **caractérisé en ce que** la plaque (5) présente sur sa face avant (21) une surface de roulement (7) pour le rouleau (9) de l'élément de réglage (8).

8. Stock selon la revendication 7, **caractérisé en ce que** la surface de roulement (7) présente une partie coudée (10) qui forme avec la plaque (5) un angle (β) qui se situe entre 0 et 90°.

9. Stock selon l'une quelconque des revendications précédentes, **caractérisé en ce que** le plan de stockage (E) est formé par un transporteur à rouleaux présentant plusieurs rouleaux d'entraînement (17) entraînés.

10. Stock selon l'une quelconque des revendications précédentes, **caractérisé en ce que** la zone de préparation de commandes (2) présente un transporteur horizontal (22) avec une vitesse de transport (V₂) élevée par rapport à la vitesse (V₁) des colis s'acheminant de façon successive dans la position de prélèvement avant.

11. Stock selon la revendication 10, **caractérisé en ce que** le transporteur horizontal (22) et l'élément de réglage (8) sont entraînés au moyen d'un arbre d'entraînement (15) commun.
